# EUROPEAN PATENT SPECIFICATION

(11) **EP 2 775 130 B1**
(45) Date of publication and mention of the grant of the patent: **29.11.2017**
(21) Application number: 13184477.1
(22) Date of filing: 16.09.2013
(51) Int. Cl.: F02M 21/02

(54) **System for supplying liquefied natural gas fuel**
System zur Zufuhr von verflüssigtem Naturgaskraftstoff
Système d'alimentation en carburant de gaz naturel liquéfié

(30) Priority: 06.03.2013 KR 20130024174
(43) Date of publication of application: 10.09.2014
(73) Proprietor: Hyundai Heavy Industries Co., Ltd., Ulsan 682-792 (KR)
(72) Inventor: Kang, Min Ho, Busan (KR); Lee, Jong Bum, Ulsan (KR); Han, Ju Seog, Ulsan (KR); Heo, Hee Seung, Ulsan (KR)
(74) Representative: Betten & Resch

(56) References cited:
- KR-A- 20120 049 731
- KR-A- 20120 126 754
- KR-A- 20120 126 755
- KR-A- 20120 138 901

## Description

### BACKGROUND

An embodiment of the present invention relates to a system for supplying LNG fuel.

A ship is a transport vehicle for sailing across the ocean, carrying bulk of minerals, crude oil, natural gas, several thousands of containers, etc. A ship is made of steel and moves by propulsion generated through the rotation of a propeller when it is floating on a water plane by buoyancy.

A ship generates propulsion by driving an engine. The engine moves a piston using a gasoline or diesel and rotates a crankshaft by a reciprocating motion performed by the piston, so that a shaft connected to the crankshaft rotates to drive the propeller. An example of such an engine is shown in KR-10-2012-0126755.

However, recently, a Liquefied Natural Gas (LNG) carrier is using LNG fuel supplying method of driving an engine using LNG as a fuel. This LNG fuel supplying method has also been used in other ships in addition to the LNG carrier.

It is generally known that LNG is clean fuel and LNG deposits are greater than oil reserves. LNG consumption has surged with development of a mining technique and a transporting technique. Methane, which is the main component of LNG, is generally kept in a liquid state at a temperature of -162°C or less under 1 atmospheric pressure. The volume of the liquefied methane is approximately 1/600 of that of methane in a gaseous state as the standard state, and the specific gravity of the liquefied methane is 0.42, which is about half of the specific gravity of the crude oil.

However, the temperature and the pressure, etc. for driving the engine may be different from the state of LNG stored in a tank. Accordingly, research and development of a technique for supplying LNG to an engine by controlling the temperature and the pressure, etc. of the stored LNG in a liquid state has continued.

### SUMMARY OF THE INVENTION

In an embodiment, a system for supplying LNG fuel may use only one heater or one heat exchanger so as to adjust the temperature to a required level for a dual fuel engine, thereby simplifying the system and reducing the costs.

In an embodiment, a system for supplying LNG fuel may heat LNG outputted from an LNG storage tank using glycol water. The glycol water heats the LNG by circulating a first heat exchanger formed on a upstream porion of a MEGI engine and a second heat exchanger formed on a upstream portion of the dual fuel engine. As a result, the efficiency of the system may be enhanced by using a heat source integrally.

A system for supplying LNG fuel according to an embodiment includes a fuel supplying line connected from an LNG storage tank to a high pressure engine and a low pressure engine, respectively; a pump formed on the fuel supplying line, and configured to pressurize LNG outputted from the LNG storage tank to high pressure; a first heat exchanger formed on the fuel supplying line between the high pressure engine and the pump, and configured to heat the LNG supplied from the pump; a second heat exchanger formed on the fuel supplying line between the low pressure engine and the LNG storage tank, and configured to evaporate the LNG in a liquid state supplied from the LNG storage tank; and a heat source supplying line configured to apply heat to the LNG by supplying glycol water to the first heat exchanger and the second heat exchanger.

The LNG in a liquid state outputted from the LNG storage tank may be evaporated by the second heat exchanger, without forcible heating of the LNG using an extra heat source.

The heat source supplying line may include a glycol heater configured to heat glycol water heat-exchanged with the LNG in the first heat exchanger or the second heat exchanger, and supply the heated glycol water to the first heat exchanger or the second heat exchanger.

The heat source supplying line may supply sequentially the glycol water to the first heat exchanger and the second heat exchanger, or supply the glycol water to the second heat exchanger by making a detour around the first heat exchanger.

The pump may comprise a boosting pump configured to pressurize the LNG stored in the LNG storage tank or outputted from the LNG storage tank; and a high pressure pump configured to pressurize the LNG outputted from the boosting pump to a pressure of 200bar to 400bar.

The boosting pump may pressurize the LNG to a pressure of 1bar to 25bar.

The fuel supplying line may be branched from a rear part of the boosting pump, and be connected to the high pressure engine and the low pressure engine, respectively.

The system may further include a decompression means formed on the fuel supplying line connected to the low pressure engine.

The high pressure engine may be a MEGI engine, and the low pressure engine may be a dual fuel engine.

The system may further include a methane number measuring sensor formed on the fuel supplying line and configured to sense methane number of the LNG.

The system may further include a gas mixing line configured to supply a boil off gas BOG generated from the LNG storage tank to the second heat exchanger.

A system for supplying LNG fuel in an embodiment heats and supplies LNG by using one heater or one heat exchanger for each of a MEGI engine and a dual fuel engine, thereby simplifying the configuration of the system and ensuring economic feasibility.

The system in an embodiment heats the LNG up to a desired temperature by using glycol water circulating integrally the heat exchangers. As a result, an efficient system may be obtained by simplifying a heat system.

### BRIEF DESCRIPTION OF THE DRAWINGS

The above and other features and advantages of the present invention will become readily apparent by reference to the following detailed description when considered in conjunction with the accompanying drawings wherein:
FIG. 1 is a conceptual view of a conventional system for supplying an LNG fuel;
FIG. 2 is a conceptual view of a system for supplying an LNG fuel according to an embodiment;
FIG. 3 is a sectional view illustrating an LNG storage tank in the system according to an embodiment; and
FIG. 4 is a conceptual view of a system for supplying LNG fuel according to an embodiment.

### DETAILED DESCRIPTION

Hereinafter, various embodiments of the present invention will be explained in more detail with reference to the accompanying drawings.

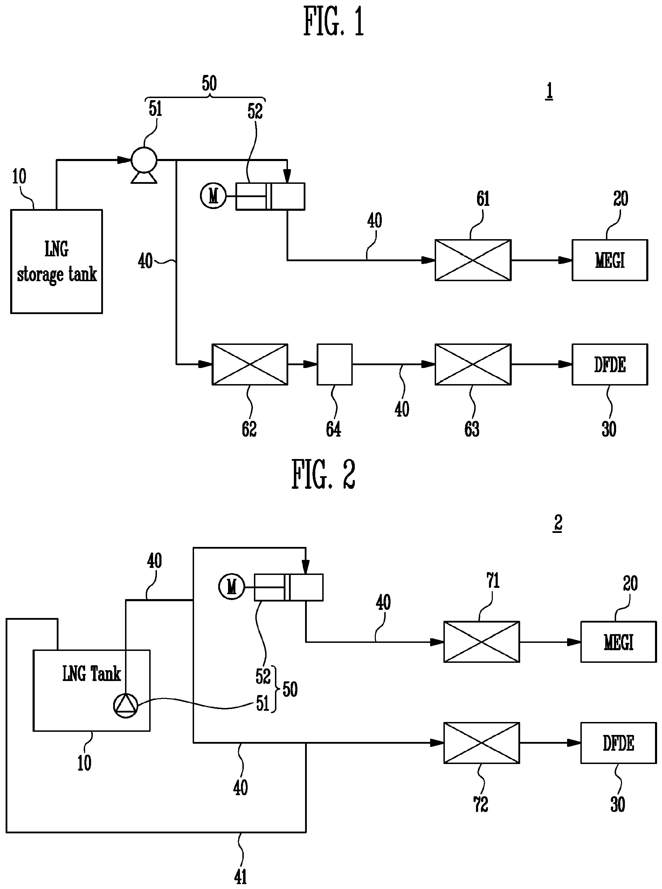

FIG. 1 is a conceptual view of a conventional system for supplying an LNG fuel.

In FIG. 1, the conventional system 1 of supplying the LNG fuel includes an LNG storage tank 10, a high pressure engine 20, a low pressure engine 30, a pump 50, a high pressure heat exchanger 61, a forcing vaporizer 62 and a low pressure heater 63. The high pressure engine 20 may be a MEGI engine, and the low pressure engine 30 may be a dual fuel engine, and the pump 50 may include a boosting pump 51 and a high pressure pump 52. An LNG to be described below may include natural gas NG in a supercritical state, etc. as well as the NG in a liquid state.

In the system 1, the LNG outputted from the boosting pump 51 is divided before it is delivered to the high pressure pump 52. Some of the LNG is pressurized by the high pressure pump 52, the pressurized LNG is heated by the high pressure heat exchanger 61, and then the heated LNG is supplied into the high pressure engine 20. The other LNG is pressurized by the boosting pump 51, the pressurized LNG is vaporized by the forcing vaporizer 62, the vaporized LNG is heated by the low pressure heater 63, and then the heated LNG is supplied into the low pressure engine 30.

The high pressure heat exchanger 61, the forcing vaporizer 62 and the low pressure heater 63 are used for heating the LNG, the high pressure heat exchanger 61 heats the LNG to a temperature of 40°C to 60°C required for the high pressure engine 20, and the forcing vaporizer 62 vaporizes the LNG in a liquid state up to -120°C. The low pressure heater 63 heats the LNG to the temperature of 40°C to 60°C required for the low pressure engine 30, and then supplies the heated LNG to the low pressure engine 30.

The conventional system 1 uses a method of heating twice the LNG supplied to the low pressure engine 30. This is for ensuring methane number of the LNG. Particularly, the LNG includes methane, ethane and propane. In the event that the LNG is heated up to -120°C by the forcing vaporizer 62, the methane is vaporized, and the ethane or the propane remains as a mist. Here, the methane number of the LNG may be increased in the event that the mist in the LNG is removed.

Accordingly, the system 1 forces the only methane in the LNG to vaporize by using the forcing vaporizer 62 and removes the mist through a mist remover 64, thereby enhancing the methane number. Subsequently, the low pressure heater 63 heats again the LNG up to a temperature needed for the low pressure engine 30. This is for achieving the methane number of the LNG required for the low pressure engine 30.

However, the temperature for the LNG should be kept to a specific temperature so as to change only the ethane or the propane in the LNG to the mist and remove the mist, and thus driving efficiency of the system 1 may be deteriorated. Additionally, facilities for treating the mist will be required which will physically separate the mist from the LNG and output the mist, and thus the costs for establishing the system 1 may highly increase.

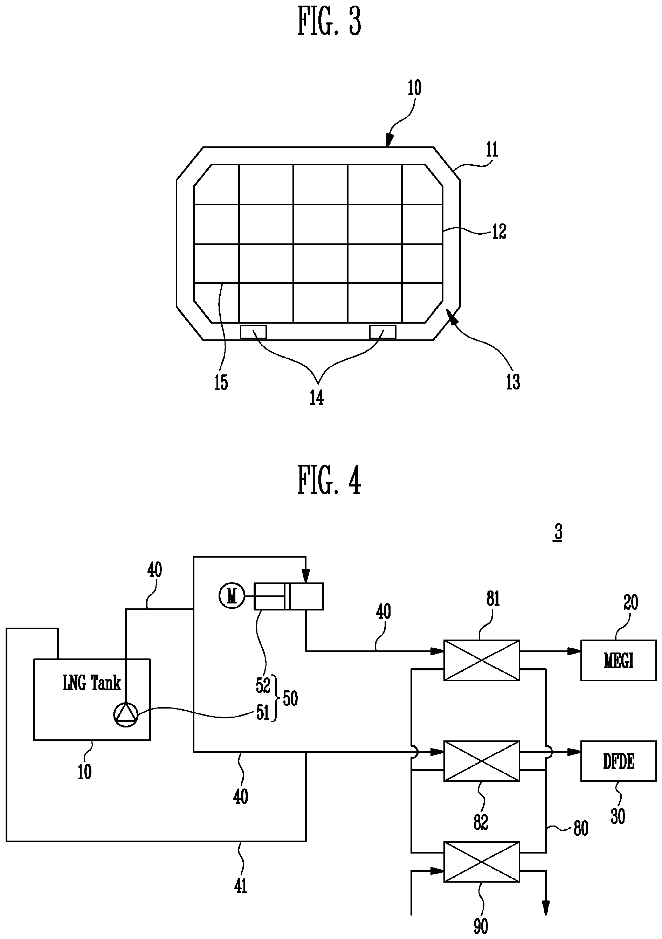

FIG. 2 is a conceptual view of a system for supplying an LNG fuel according to an embodiment, and FIG. 3 is a sectional view illustrating an LNG storage tank in the system according to an embodiment.

In FIG. 2, the system 2 for supplying the LNG fuel in an embodiment may include an LNG storage tank 10, a high pressure engine 20, a low pressure engine 30, a pump 50, a first heater 71 and a second heater 72. The LNG storage tank 10, the high pressure engine 20, the low pressure engine 30, the pump 50, etc. use the same numerals as in the conventional system 1, but they may not be the same elements.

The LNG storage tank 10 stores LNG to be supplied to the engines 20 and 30. The LNG storage tank 10 stores the LNG in a liquid state. Here, the LNG storage tank 10 may be a pressure-type tank.

As shown in FIG. 3, the LNG storage tank 10 may include an outer tank 11, an inner tank 12 and an adiabatic section 13. The outer tank 11 may correspond to an outer wall of the LNG storage tank 10 and be made up of steel. A cross section of the LNG storage tank 10 may be polygonal shaped.

The inner tank 12 is formed in the outer tank 11, and may be provided in the outer tank 11 by a support 14. The support 14 may be formed under the inner tank 12, and be further formed on a side of the inner tank 12 to prevent a left and right motion.

The inner tank 12 may be made up of stainless, and be designed to tolerate the pressure of 5bar to lObar (e.g., 6bar). This is because an internal pressure of the inner tank 12 may be increased according as an LNG in the inner tank 12 is evaporated to generate the evaporation gas.

In an embodiment, a baffle 15 may be included in the inner tank 12. The baffle 15 may be a grid-patterned plate. The internal pressure of the inner tank 12 may be uniformly distributed due to the baffle 15 so as to prevent that only a part of the inner tank 12 is intensively applied with a pressure.

The adiabatic section 13 may be located between the inner tank 12 and the outer tank 11 and may prevent external thermal energy from being transferred to the inner tank 12. Here, the adiabatic section 13 may be in a vacuum state. The LNG storage tank 10 may have more efficient toleration to high pressure compared to common tanks, as the adiabatic section 13 is in a vacuum. For example, the LNG storage tank 10 may tolerate the pressure of 5bar to 20bar by using the adiabatic section 13 in a vacuum.

Since the system 2 in an embodiment uses the LNG storage tank 10 including the adiabatic section 13 which may be between the outer tank 11 and the inner tank 12 and be in a vacuum, the evaporation gas may be generated minimally. In addition, the LNG storage tank 10 may not break down or be damaged even though its internal pressure increases.

The engines 20 and 30 are driven by the LNG supplied from the LNG storage tank 10 to generate power. Here, the engines 20 and 30 include the high pressure engine 20 and the low pressure engine 30. The high pressure engine 20 may be an MEGI engine, and the low pressure engine 30 may be a dual fuel engine.

In the engine 20 and 30, a piston (not shown) in a cylinder (not shown) makes a reciprocating motion according to combustion of the LNG, and thus a crankshaft (not shown) connected to the piston may rotate, and a shaft (not shown) connected to the crankshaft may rotate. Accordingly, a propeller (not shown) connected to the shaft rotates when the engine 20 and 30 is driven, thereby moving the ship forward or backward.

In an embodiment, the engine 20 and 30 may be an engine for driving the propeller or an engine for generating electricity or power. That is, the type of the engine 20 and 30 is not limited. However, the engine 20 and 30 may be an internal combustion engine for generating a driving force by combusting the LNG.

The low pressure engine 30 may be the DFDE engine where the LNG and the oil are not supplied as mixed but are selectively supplied. This prevents the LNG and the oil from being mixed, and so efficiency of the low pressure engine 30 may not be deteriorated. The combustion temperature of the LNG is different from that of the oil.

In an embodiment, the high pressure engine 20 may receive the LNG in a supercritical state (40°C to 60°C, 200bar to 400bar) from the first heater 71, and then combust together the received LNG and the fuel in the cylinder, thereby exploding the LNG. Here, the fuel means pilot fuel injected into the cylinder to combust the LNG, and it is heated to the temperature of above 1,000°C in the cylinder to facilitate combustion of the LNG.

The low pressure engine 30 may receive vaporized LNG (40°C to 60°C, 5bar to lObar) from the second heater 72, and combust together the received LNG and the fuel, thereby generating the driving force. The state of the LNG supplied to the high pressure engine 20 and the low pressure engine 30 may vary depending on the state of the LNG required by each of the engines 20 and 30.

A fuel supplying line 40 for delivering the LNG may be provided between the LNG storage tank 10 and the engine 20 and 30. The pump 50, the first heater 71, the second heater 72, etc. may be provided on the fuel supplying line 40 so that the LNG is supplied to the engine 20 and 30.

Here, a fuel supplying valve (not shown) is equipped on the fuel supplying line 40, and an amount of supply of the LNG may be adjusted depending on the open level of the fuel supplying valve.

The fuel supplying line 40 is branched from a rear part of the boosting pump 51, and thus the LNG may be supplied to the high pressure engine 20 and the low pressure engine 30 through the corresponding parts of the fuel supplying line 40. The high pressure pump 52 and the first heater 71 may be formed on a part of the fuel supplying line 40 corresponding to the high pressure engine 20, and the second heater 72 may be formed on the other part of the fuel supplying line 40 corresponding to the low pressure engine 30.

The pump 50 is provided on the fuel supplying line 40 and pressurizes the LNG outputted from the LNG storage tank 10 to high pressure. The pump 50 may include the boosting pump 51 and the high pressure pump 52.

The boosting pump 51 may be provided on the fuel supplying line 40 connected between the LNG storage tank 10 and the high pressure pump 52 or in the LNG storage tank 10. The boosting pump 51 supplies an adequate amount of the LNG to the high pressure pump 52, thereby preventing cavitation of the high pressure pump 52.

The boosting pump 51 may extract the LNG from the LNG storage tank 10 and pressurize the extracted LNG in a range of several bar to several tens bar. As a result, the LNG may be pressurized to the pressure of 1bar to 25bar by the boosting pump 51. The LNG pressurized by the boosting pump 51 may have pressure higher than pressure required for the low pressure engine 30, and thus the system 2 may further include a decompression means (not shown) provided on the fuel supplying line 40 connected to the low pressure engine 30.

The LNG stored in the LNG storage tank 10 may be in a liquid state. In this case, the boosting pump 51 may pressurize the LNG outputted from the LNG storage tank 10 to increase the pressure and the temperature a bit higher, and the LNG pressurized by the boosting pump 51 may still be in a liquid state.

The high pressure pump 52 pressurizes the LNG outputted from the LNG storage tank 10 to high pressure, and the pressurized LNG is supplied to the high pressure engine 20. The LNG is outputted from the LNG storage tank 10 with the pressure of approximately lObar and then is first-pressurized by the boosting pump 51. The high pressure pump 52 second-pressurizes the LNG in a liquid state pressurized by the boosting pump 51 and supplies the second-pressurized LNG to the first heater 71.

Here, the high pressure pump 52 may pressurize the LNG up to the pressure of, for example, 200bar to 400bar required for the high pressure engine 20 and supply the pressurized LNG to the high pressure engine 20, and so the high pressure engine 20 may generate the propulsion by using the LNG.

The high pressure pump 52 may pressurize the LNG in a liquid state outputted from the boosting pump 51 to high pressure and phase-change the LNG so that the LNG is in a supercritical state having the temperature and the pressure higher than the critical point. The temperature of the LNG in the supercritical state may be -20°C or less, higher than critical temperature.

The high pressure pump 52 may change the LNG in a liquid state to LNG in a supercooled liquid state by pressurizing the LNG in a liquid state to high pressure. Here the supercooled liquid state means state that the pressure of the LNG is higher than the critical pressure and the temperature of the LNG is lower than the critical temperature.

Particularly, the high pressure pump 52 may pressurize the LNG in a liquid state outputted from the boosting pump 51 up to high pressure of 200bar to 400bar but have the temperature of the LNG be lower than the critical temperature, thereby phase-changing the state of the LNG to the supercooled liquid state. Here, the temperature of the LNG in the supercooled liquid state may be, for example, -140°C to -60°C, which is lower than the critical temperature.

The amount of the heat applied to the LNG by the first heater 71 may vary according to how the LNG is phase-changed by the high pressure pump 52. In the event that the high pressure pump 52 phase-changes the state of the LNG to a supercritical state, the first heater 71 heats the LNG from temperature of -20°C to temperature of 40°C to 60°C. In the event that the high pressure pump 52 phase-changes the state of the LNG to the supercooled liquid state, the first heater 71 heats the LNG from temperature of -60°C to temperature of 40°C to 60°C.

The first heater 71 is provided on the fuel supplying line 40 located between the high pressure engine 20 and the pump 50 and heats the LNG supplied from the pump 50. The pump 50 for supplying the LNG to the first heater 71 may be the high pressure pump 51. The first heater 71 heats the LNG in the supercooled liquid state or supercritical state while substantially maintaining the pressure of 200bar to 400bar outputted from the high pressure pump 52, thereby changing the LNG to LNG in the supercritical state which is from 40°C to 60°C. Subsequently, the first heater 71 may supply the changed LNG to the high pressure engine 20.

The first heater 71 may be a steam heater for heating the LNG using steam supplied from a boiler (not shown), an electric heater for heating the LNG using electric energy, or a heater for heating the LNG using waste heat generated from a generator or other facilities in the ship. The second heater 72 may be similar to the first heater 71. Here, the first heater 71 and the second heater 72 may be connected to one boiler through the corresponding steam supplying line (not shown) and may receive the steam from the boiler.

The second heater 72 is provided on the fuel supplying line 40 located between the low pressure engine 30 and the LNG storage tank 10 and evaporates the LNG in a liquid state supplied from the LNG storage tank 10. The fuel supplying line 40 is branched from the rear part of the boosting pump 51, a part of the fuel supplying line 40 is connected to the high pressure engine 20, and the other part of the fuel supplying line 40 is connected to the low pressure engine 30. As a result, the second heater 72 may receive the LNG from the boosting pump 51 and heat the received LNG. The LNG may be phase-changed from a liquid state to a gaseous state by the second heater 72.

Particularly, the LNG outputted from the boosting pump 51 may have the pressure of several bar to several tens bar and the temperature of -160°C to -140°C. Here, the second heater 72 may boost the temperature of the LNG up to 40°C to 60°C corresponding to the temperature required for the low pressure engine 30.

In the event that the pressure outputted from the boosting pump 51 corresponds to the pressure required for the low pressure engine 30, the LNG may be smoothly supplied even though no change in the pressure is made. However, in the event that the pressure outputted from the boosting pump 51 is higher than that required for the low pressure engine 30, there may be problems in driving the low pressure engine 30. The system 2 in an embodiment may reduce the pressure of the LNG using a decompression means (not shown) provided on the fuel supplying line 40 connected to the low pressure engine 30, thereby satisfying the pressure required for the low pressure engine 30.

In an embodiment, the LNG in a liquid state outputted from the LNG storage tank 10 or outputted from the boosting pump 51 may be evaporated by the second heater 72 without forcible heating of the LNG using an extra heat source (excluding heating by outer heat penetration). That is, the LNG is directly evaporated by the second heater 72 while the LNG is supplied from the boosting pump 51 to the low pressure engine 30.

The system 2 in an embodiment may boost the temperature of the LNG up to the temperature required for the low pressure engine 30 through single heating by the second heater 72, not heating twice by the forcing vaporizer 62 and the low pressure heater 63. Accordingly, the system 2 may be simplified and the costs may be reduced. Additionally, it is convenient to control the system 2 because the system 2 heats the LNG directly up to the temperature required for the low pressure engine 30.

The system 2 in an embodiment may further include a gas mixing line 41 for supplying boil off gas BOG outputted from the LNG storage tank 10 to the second heater 72. The BOG may be naturally generated due to various causes such as the heat penetrated from the outside to the LNG storage tank 10, and it may have pressure corresponding to the internal pressure of the LNG storage tank 10.

Conventionally, the BOG generated from the LNG storage tank 10 was handled by simply emitting the BOG to the outside. However, the system 2 in an embodiment supplies the BOG to the second heater 72, mixes and heats the supplied BOG and the LNG supplied from the boosting pump 51 in the second heater 72, and then supplies the mixed BOG and LNG to the low pressure engine 30. As a result, the system 2 may prevent waste of the BOG.

The system 2 in an embodiment may further include a methane number measuring sensor (not shown) provided on the fuel supplying line 40 and for sensing the methane number of the LNG. The conventional system 1 enhances the methane number of the LNG by removing ethane, etc. from the LNG through the forcing vaporizer 62. However, the system 2 in an embodiment measures the methane number of the LNG through the methane number measuring sensor without forcibly vaporizing the LNG and supplies the BOG having a high methane number to the fuel supplying line 40 when the methane number of the LNG is low, thereby adjusting the methane number of the LNG to the methane number required for the low pressure engine 30. That is, the amount of the BOG supplied to the second heater 72 through the gas mixing line 41 may vary depending on the measured result of the methane number measuring sensor. In this case, a BOG inflow valve (not shown) may be provided on the gas mixing line 41.

Since the system 2 in an embodiment changes the state of the LNG to the state required for each of the engines 20 and 30 through the first heater 71 and the second heater 72 when it supplies the LNG to the high pressure engine 20 and the low pressure engine 30, the system 2 may be simplified by omitting a means for removing the mist, etc., and construction costs and maintenance costs of the system 2 may be reduced.

FIG. 4 is a conceptual view of a system for supplying LNG fuel according to an embodiment.

In FIG. 4, the system 3 for supplying the LNG fuel in an embodiment may include an LNG storage tank 10, a high pressure engine 20, a low pressure engine 30, a pump 50, a first heat exchanger 81, a second heat exchanger 82, a heat source supplying line 80 and a glycol heater 90. Since the other elements of the embodiment except for the first heat exchanger 81, the second heat exchanger 82, the heat source supplying line 80 and the glycol heater 90 are similar to those in the embodiment shown in FIG. 2, any further description concerning the similar elements will be omitted.

The first heat exchanger 81 is provided on the fuel supplying line 40 between the high pressure engine 20 and the pump 50 and heats the LNG supplied from the pump 50. The pump 50 for supplying the LNG to the first heat exchanger 81 may be the high pressure pump 52. The first heat exchanger 81 may heat the LNG in a supercooled liquid state or supercritical state while substantially maintaining the pressure of 200bar to 400bar outputted from the high pressure pump 52, thereby changing the LNG to LNG in a supercritical state of 40°C to 60°C. Subsequently, the first heat exchanger 81 may supply the changed LNG to the high pressure engine 20.

A heat source supplying line 80 may be connected to the first heat exchanger 81 to supply glycol water. The glycol water applies heat to the LNG flowing through the first heat exchanger 81 and the glycol water loses heat by the LNG. As a result, the glycol water may be refrigerated, and the LNG may be heated. In this time, the refrigerated glycol water may flow from the first heat exchanger 81 to the glycol heater 90 through the heat source supplying line 80.

The second heat exchanger 82 is provided on the fuel supplying line 40 between the low pressure engine 30 and the LNG storage tank 10 and evaporates the LNG in a liquid state supplied from the LNG storage tank 10. The second heat exchanger 82 may receive the LNG from the boosting pump 51 and heat the received LNG, and thus the state of the LNG may be changed from a liquid state to a gaseous state.

The second heat exchanger 82 may be connected to the heat source supplying line 80 like the first heat exchanger 81, receive the glycol water through the heat source supplying line 80, and heat the LNG using the received glycol water. The glycol water may be refrigerated while it flows through the second heat exchanger 82, and the LNG may be evaporated.

The heat source supplying line 80 applies heat to the LNG by supplying the glycol water to the first heat exchanger 81 and the second exchanger 82. The heat source supplying line 80 may include a glycol heater 90 for heating the glycol water refrigerated by heat-exchanging with LNG in the first heat exchanger 81 or the second heat exchanger 82 and supplying the heated glycol water to the first heat exchanger 81 or the second heat exchanger 82. The glycol heater 90 may heat-exchange steam generated by a boiler (not shown) with the glycol water, thereby heating the glycol water.

The glycol water heated by the glycol heater 90 may heat the LNG in the first heat exchanger 81 or the second heat exchanger 82, thereby heating the LNG. Here, the glycol water may be supplied to each of the first heat exchanger 81 and the second heat exchanger 82 and then flow to the heat source supplying line 80, or be sequentially supplied to the first heat exchanger 81 and the second heat exchanger 82. In an embodiment, some of the glycol water may be supplied to the second heat exchanger 82 by making a detour around the first heat exchanger 81.

Particularly, a part of the glycol water outputted from the glycol heater 90 heats the LNG in the first heat exchanger 81, flows to the second heat exchanger 82, and then heats again the LNG in the second heat exchanger 82. The other glycol water may heat the LNG in the second heat exchanger 82 by making a detour around the first heat exchanger 81. That is, the second heat exchanger 82 may heat the LNG by using the glycol water heat-exchanged with the LNG in the first heat exchanger 81 and the glycol water supplied from the glycol heater 90. In an embodiment, the glycol water may be sequentially supplied to the second heat exchanger 82 and the first heat exchanger 81, or be supplied to the first heat exchanger 81 by making a detour around the second heat exchanger 82. As described above, the heat source supplying line 80 realizes various methods of supplying the glycol water. This is to efficiently increase the temperature of the LNG and at the same time efficiently heat the LNG.

The system 3 in an embodiment may evaporate the LNG in a liquid state outputted from the LNG storage tank 10 or the boosting pump 51 by using the second heat exchanger 82, without forcible heating of the LNG using an extra heat source, as was the case in the embodiment above. The LNG outputted from the boosting pump 51 may be directly heated by the second heat exchanger 82. In this case, the system 3 in an embodiment may use a methane number measuring sensor and a gas mixing line 41, to satisfy the methane number of the LNG to the methane number required for the low pressure engine 30. Since the methane number measuring sensor and the gas mixing line 41 are the same as in the embodiment above, the description concerning the methane number measuring sensor and the gas mixing line 41 will be omitted.

In an embodiment, the state of the LNG may be changed to the state required by each of the engines 20 and 30 by using the first heat exchanger 81 and the second heat exchanger 82 while supplying the LNG to the high pressure engine 20 and the low pressure engine 30, and heat the LNG through one glycol water cycle. As a result, the system may be more efficiently operated.

## Claims

1. A system for supplying LNG fuel, the system comprising:
a fuel supplying line (40) connected from an LNG storage tank (10) to a high pressure engine (20) and a low pressure engine (30), respectively;
a pump (50) provided on the fuel supplying line (40) and configured to pressurize LNG outputted from the LNG storage tank (10) to high pressure;
a first heat exchanger (81) provided on the fuel supplying line (40) between the high pressure engine (20) and the pump (50) and configured to heat the LNG supplied from the pump (50);
a second heat exchanger (82) provided on the fuel supplying line (40) between the low pressure engine (30) and the LNG storage tank (10) and configured to evaporate the LNG in a liquid state supplied from the LNG storage tank (10); and
a heat source supplying line (80) configured to apply heat to the LNG by supplying glycol water to the first heat exchanger (81) and the second heat exchanger (82),
wherein the first heat exchanger and the second heat exchanger are arranged in series with respect to a flow of a heat source.

2. The system of claim 1, wherein the LNG in a liquid state outputted from the LNG storage tank (10) is evaporated by the second heat exchanger (82) without heating forcibly the LNG using an extra heat source.

3. The system of claim 1, wherein the heat source supplying line (80) comprises a glycol heater (90) configured to heat glycol water heat-exchanged with the LNG in the first heat exchanger (81) or the second heat exchanger (82) and supply the heated glycol water to the first heat exchanger (81) or the second heat exchanger (82).

4. The system of claim 1, wherein the pump (50) comprises:
a boosting pump (51) configured to pressurize the LNG stored in the LNG storage tank (10) or outputted from the LNG storage tank (10); and
a high pressure pump (52) configured to pressurize the LNG outputted from the boosting pump (51) to a pressure of 200bar to 400bar.

5. The system of claim 5, wherein the boosting pump (51) pressurizes the LNG to a pressure of 1bar to 25bar.

6. The system of claim 5, wherein the fuel supplying line (40) is branched from a rear part of the boosting pump (51), and is connected to the high pressure engine (20) and the low pressure engine (30), respectively.

7. The system of claim 1, further comprising:
a decompression means provided on the fuel supplying line (40) connected to the low pressure engine (30).

8. The system of claim 1, wherein the high pressure engine (20) is a MEGI engine, and the low pressure engine (30) is a dual fuel engine.

9. The system of claim 1, further comprising:
a methane number measuring sensor provided on the fuel supplying line (40) and configured to sense a methane number of the LNG.

10. The system of claim 1, further comprising:
a gas mixing line (41) configured to supply a boil off gas BOG generated from the LNG storage tank (10) to the second heat exchanger (82).

## Patentansprüche

1. System zum Liefern von Flüssigerdgas-Kraftstoff, (LNG-Kraftstoff), wobei das System Folgendes umfasst:
eine Kraftstoffzufuhrleitung (40), die einerseits mit einem LNG-Speichertank (10) und andererseits mit einer Hochdruckkraftmaschine (20) bzw. einer Niederdruckkraftmaschine (30) verbunden ist;
eine Pumpe (50), die in der Kraftstoffzufuhrleitung (40) vorgesehen ist und konfiguriert ist, LNG, das von dem LNG-Speichertank (10) ausgegeben wird, auf einen hohen Druck zu bringen;
einen ersten Wärmetauscher (81), der in der Kraftstoffzufuhrleitung (40) zwischen der Hochdruckkraftmaschine (20) und der Pumpe (50) vorgesehen ist und konfiguriert ist, das von der Pumpe (50) zugeführte LNG zu erwärmen;
einen zweiten Wärmetauscher (82), der in der Kraftstoffzufuhrleitung (40) zwischen der Niederdruckkraftmaschine (30) und dem LNG-Speichertank (10) vorgesehen ist und konfiguriert ist, das LNG in einem flüssigen Zustand, das von dem LNG-Speichertank (10) zugeführt wird, zu verdampfen; und
eine Wärmequellenversorgungsleitung (80), die konfiguriert ist, durch Versorgen des ersten Wärmetauschers (81) und des zweiten Wärmetauschers (82) mit Glykol-Wasser das LNG mit Wärme zu beaufschlagen,
wobei der erste Wärmetauscher und der zweite Wärmetauscher in Bezug auf eine Strömung einer Wärmequelle in Reihe angeordnet sind.

2. System nach Anspruch 1, wobei das LNG in einem flüssigen Zustand, das von dem LNG-Speichertank (10) ausgegeben wird, durch den zweiten Wärmetauscher (82) verdampft wird, ohne das LNG unter Verwendung einer gesonderten Wärmequelle erzwungen zu erwärmen.

3. System nach Anspruch 1, wobei die Wärmequellen-Versorgungsleitung (80) eine Glykol-Heizeinrichtung (90) umfasst, die konfiguriert ist, Glykol-Wasser, das einem Wärmeaustausch mit dem LNG in dem ersten Wärmetauscher (81) oder in dem zweiten Wärmetauscher (82) unterworfen worden ist, zu erwärmen und das erwärmte Glykol-Wasser dem ersten Wärmetauscher (81) oder dem zweiten Wärmetauscher (82) zuzuführen.

4. System nach Anspruch 1, wobei die Pumpe (50) folgendes umfasst:
eine Verstärkerpumpe (51), die konfiguriert ist, das in dem LNG-Speichertank (10) gespeicherte oder von dem LNG-Speichertank (10) ausgegebene LNG mit Druck zu beaufschlagen; und
eine Hochdruckpumpe (52), die konfiguriert ist, das von der Verstärkerpumpe (51) ausgegebene LNG auf einen Druck im Bereich von 200 Bar bis 400 Bar zu bringen.

5. System nach Anspruch 5, wobei die Verstärkerpumpe (51) das LNG auf einen Druck im Bereich von 1 Bar bis 25 Bar bringt.

6. System nach Anspruch 5, wobei die Kraftstoffzufuhrleitung (40) von einem hinteren Teil der Verstärkerpumpe (51) abzweigt und mit der Hochdruckkraftmaschine (20) bzw. der Niederdruckkraftmaschine (30) verbunden ist.

7. System nach Anspruch 1, das ferner Folgendes umfasst:
ein Dekomprimierungsmittel, das in der Kraftstoffversorgungsleitung (40), die mit der Niederdruckkraftmaschine (30) verbunden ist, vorgesehen ist.

8. System nach Anspruch 1, wobei die Hochdruckkraftmaschine (20) eine MEGI-Kraftmaschine ist und die Niederdruckkraftmaschine (30) eine Zweifachkraftstoff-Kraftmaschine ist.

9. System nach Anspruch 1, das ferner Folgendes umfasst:
einen Methanzahl-Messsensor, der in der Kraftstoffzufuhrleitung (40) vorgesehen ist und konfiguriert ist, eine Methanzahl des LNG zu erfassen.

10. System nach Anspruch 1, das ferner Folgendes umfasst:
eine Gasmischleitung (41), die konfiguriert ist, dem zweiten Wärmetauscher (82) ein Abdampfgas BOG, das von dem LNG-Speichertank (10) erzeugt wird, zuzuführen.

## Revendications

1. Système d'alimentation en carburant GNL, le système comprenant :
une conduite d'alimentation en carburant (40) reliée depuis un réservoir de stockage de GNL (10) à un moteur à haute pression (20) et à un moteur à basse pression (30), respectivement ;
une pompe (50) prévue sur la conduite d'alimentation en carburant (40) et configurée pour pressuriser le GNL sortant du réservoir de stockage de GNL (10) jusqu'à une pression élevée ;
un premier échangeur de chaleur (81) prévu sur la conduite d'alimentation en carburant (40) entre le moteur à haute pression (20) et la pompe (50) et configuré pour chauffer le GNL fourni par la pompe (50) ;
un second échangeur de chaleur (82) prévu sur la conduite d'alimentation en carburant (40) entre le moteur à basse pression (30) et le réservoir de stockage de GNL (10) et configuré pour faire évaporer le GNL à l'état liquide fourni par le réservoir de stockage de GNL (10) ; et
une conduite d'alimentation de source de chaleur (80) configurée pour appliquer de la chaleur au GNL en fournissant de l'eau glycolée au premier échangeur de chaleur (81) et au second échangeur de chaleur (82),
dans lequel le premier échangeur de chaleur et le second échangeur de chaleur sont agencés en série par rapport à l'écoulement d'une source de chaleur.

2. Système selon la revendication 1, dans lequel le GNL à l'état liquide sortant du réservoir de stockage de GNL (10) s'évapore grâce au second échangeur de chaleur (82) sans chauffage forcé du GNL au moyen d'une source de chaleur supplémentaire.

3. Système selon la revendication 1, dans lequel la conduite d'alimentation de source de chaleur (80) comprend un dispositif de chauffage au glycol (90) configuré pour chauffer l'eau glycolée soumise à un échange de chaleur avec le GNL dans le premier échangeur de chaleur (81) ou le second échangeur de chaleur (82) et fournir l'eau glycolée chauffée au premier échangeur de chaleur (81) ou au second échangeur de chaleur (82).

4. Système selon la revendication 1, dans lequel la pompe (50) comprend :
une pompe de surpression (51) configurée pour pressuriser le GNL stocké dans le réservoir de stockage de GNL (10) ou sortant du réservoir de stockage de GNL (10) ; et
une pompe à haute pression (52) configurée pour pressuriser le GNL sortant de la pompe de surpression (15) jusqu'à une pression de 200 bars à 400 bars.

5. Système selon la revendication 5, dans lequel la pompe de surpression (15) pressurise le GNL jusqu'à une pression de 1 bar à 25 bars.

6. Système selon la revendication 5, dans lequel la conduite d'alimentation en carburant (40) s'embranche à partir d'une partie arrière de la pompe de surpression (51) et est reliée au moteur à haute pression (20) et au moteur à basse pression (30), respectivement.

7. Système selon la revendication 1, comprenant en outre :
des moyens de décompression prévus sur la conduite d'alimentation en carburant (40) reliée au moteur à basse pression (30).

8. Système selon la revendication 1, dans lequel le moteur à haute pression (20) est un moteur MEGI, et le moteur à basse pression (30) est un moteur bi-carburant.

9. Système selon la revendication 1, comprenant en outre :
un capteur de mesure d'indice de méthane prévu sur la conduite d'alimentation en carburant (40) et configuré pour détecter un indice de méthane du GNL.

10. Système selon la revendication 1, comprenant en outre :
une conduite de mélange de gaz (41) configurée pour fournir un gaz d'évaporation BOG (Boil Off Gas) généré à partir du réservoir de stockage de GNL (10) au second échangeur de chaleur (82).
